# DEMANDE DE BREVET EUROPEEN

(11) **EP 4 361 768 A1**
(43) Date de publication de la demande: **01.05.2024**
(21) Numéro de dépôt: 23205404.9
(22) Date de dépôt: 24.10.2023
(51) Int. Cl.: G06F 1/3203, H04B 1/16, H04W 52/02, H04M 1/72412, H04W 4/80, H04B 5/00

(54) **GESTION DE L ALIMENTATION DANS UN CONTRÔLEUR DE COMMUNICATION EN CHAMP PROCHE - NFC**

(30) Priorité: 24.10.2022 FR 2210986
(71) Demandeur: STMicroelectronics (ALPS) SAS, 38000 Grenoble (FR)
(72) Inventeur: ARNOULD, Patrick, 38340 VOREPPE (FR)
(74) Mandataire: Casalonga

(57) **Abrégé**

Le circuit intégré de contrôleur de communication en champ proche (NFC_CTRLR) comporte une unité de gestion d'alimentation (PMU) adaptée pour retransmettre une tension d'alimentation externe (VCC_SIM1) depuis au moins un noeud d'entrée d'alimentation (VCC_IN1) vers au moins un noeud de sortie d'alimentation (VCC_OUT1) dans un mode d'alimentation en dérivation (BPSS). L'unité de gestion d'alimentation (PMU) est matériellement configurée pour automatiquement activer le mode d'alimentation en dérivation (BPSS) si la tension d'alimentation externe (VCC_SIM1) est présente sur ledit au moins un noeud d'entrée d'alimentation (VCC_IN).

## Description

Des modes de réalisation et de mise en oeuvre concernent la gestion de l'alimentation dans un contrôleur de communication en champ proche « NFC » (pour « Near Field Communication » en anglais). Des modes de réalisation et de mise en oeuvre concernent en particulier la gestion de l'alimentation de périphériques de sécurité pouvant être utilisés par le contrôleur NFC et aussi par un autre dispositif de commande de télécommunications.

La communication en champ proche « NFC » permet une communication sans contact sur une courte distance, par exemple 10 cm, entre un lecteur et un transpondeur, par modulation et rétro-modulation de l'amplitude d'une onde porteuse à 13,56 MHz. La technologie NFC est une plate-forme technologique ouverte, normalisée en particulier dans la norme ISO-14443.

Des communications NFC peuvent être mises en oeuvre entre deux dispositifs de communication de pair à pair, tels que des téléphones multifonction (usuellement désigné par l'anglicisme « smartphone ») ; ou bien entre un dispositif lecteur et un dispositif transpondeur, tel qu'une carte ou étiquette NFC ou RFID ou un téléphone multifonction émulé en mode carte.

Des périphériques de sécurité, par exemple des périphériques d'identification de l'utilisateur « SIM » (pour « Subscriber Identification Module » en anglais), fournissent un service de sécurité typiquement partagés entre différentes applications, notamment les communications NFC et d'autres télécommunications, par exemple du type téléphonie ou débit de données « LTE » (acronyme des termes anglais « Long Term Evolution » incorporant notamment les normes de téléphonie de 4ème génération « 4G » et de 5ème génération « 5G ») ou autres.

D'une part, par exemple lorsque le téléphone émule un mode carte, les périphériques de sécurité peuvent être utilisés par le contrôleur NFC pour des applications NFC (par exemple, carte de transport, titre de transport, ...) même si le téléphone est éteint ou dans un mode où les fonctionnalités de télécommunications sont désactivées (usuellement appelé « mode avion » par exemple).

D'autre part, réciproquement, si le contrôleur NFC est désactivé, par exemple dans un mode d'économie d'énergie ou forcé à un état éteint, les périphériques de sécurité peuvent être utilisés pour les autres télécommunications (par exemple la téléphonie).

Le fait de prévoir ces deux fonctionnalités présente typiquement des difficultés dans la gestion de l'alimentation des périphériques de sécurité.

En particulier, lorsque la gestion de l'alimentation des périphériques de sécurité est mise en oeuvre par le contrôleur NFC, l'utilisation des périphériques de sécurité engendre classiquement un « réveil » du contrôleur NFC par des signaux d'interruptions, c'est-à-dire une sortie du mode d'économie d'énergie, pour mettre en place l'alimentation des périphériques par des commandes logicielles, puis un retour au mode d'économie d'énergie.

Les processus de démarrage logiciel lors des réveils du contrôleur NFC engendrent des consommations inutiles d'énergie et éventuellement aussi une latence avant la mise en place effective de l'alimentation des périphériques.

Par ailleurs, si le contrôleur NFC est forcé dans l'état éteint, le réveil du contrôleur pour la gestion de l'alimentation des périphériques est classiquement impossible. En conséquence, les contrôleurs NFC classiques mettant en oeuvre la gestion de l'alimentation des périphériques ne peuvent pas bénéficier de la fonctionnalité d'être forcés dans l'état éteint.

Ainsi, il existe un besoin de remédier aux inconvénients mentionnés ci-dessus.

A cet égard, des modes de réalisation et de mise en oeuvre prévoient une configuration matérielle d'un contrôleur NFC pour effectuer la gestion de l'alimentation des périphériques, de manière automatisée et indépendante du mode de fonctionnement du contrôleur.

En particulier, des modes de réalisation et de mise en oeuvre prévoient une alimentation des périphériques par une tension d'alimentation externe fournie en dérivation par le contrôleur NFC.

Selon un aspect, il est proposé un circuit intégré de contrôleur de communication en champ proche comportant une unité de gestion d'alimentation adaptée pour retransmettre une tension d'alimentation externe depuis au moins un noeud d'entrée d'alimentation vers au moins un noeud de sortie d'alimentation dans un mode d'alimentation en dérivation, l'unité de gestion d'alimentation étant matériellement configurée pour automatiquement activer le mode d'alimentation en dérivation si la tension d'alimentation externe est présente sur ledit au moins un noeud d'entrée d'alimentation.

Par « matériellement configuré » on entend que le circuit est fabriqué pour mettre en oeuvre la fonction correspondante, et en particulier, que la fonction correspondante n'est pas issue d'une exécution logicielle d'un programme.

Selon un mode de réalisation, l'unité de gestion d'alimentation comporte au moins un circuit de détection de tension matériellement configuré pour détecter la présence de la tension d'alimentation externe sur ledit au moins un noeud d'entrée d'alimentation.

Selon un mode de réalisation, l'unité de gestion d'alimentation comporte un circuit logique matériellement configuré pour automatiquement activer le mode d'alimentation en dérivation, de manière conditionnée par ladite présence de la tension d'alimentation externe, et par au moins une donnée de configuration contenue dans un registre de configuration.

Selon un mode de réalisation, l'unité de gestion d'alimentation comporte au moins un limiteur de courant configuré pour limiter le courant sur ledit au moins un noeud de sortie d'alimentation, et l'unité de gestion d'alimentation est configurée pour commander un démarrage du limiteur de courant dans le mode d'alimentation en dérivation.

Le limiteur de courant permet notamment de prévenir le risque de dégradation causée par un appel de courant sur le noeud de sortie d'alimentation.

Selon un mode de réalisation, l'unité de gestion d'alimentation est matériellement configurée pour fonctionner de manière indépendante et automatique dans un mode basse consommation du contrôleur de communication en champ proche.

Selon un mode de réalisation, l'unité de gestion d'alimentation comporte en outre au moins un générateur de tension adapté pour générer une tension d'alimentation interne sur ledit au moins un noeud de sortie d'alimentation, dans un mode d'alimentation autonome.

Selon un autre aspect, il est également proposé un système électronique comportant un circuit intégré de contrôleur de communication en champ proche tel que défini ci-avant, une unité de commande de télécommunications apte à fournir la tension d'alimentation externe sur ledit au moins un noeud d'entrée d'alimentation du contrôleur de communication en champ proche, et au moins un périphérique de sécurité apte à être alimenté sur ledit au moins un noeud de sortie d'alimentation du contrôleur de communication en champ proche.

Selon un autre aspect, il est également proposé un procédé de gestion de l'alimentation, mis en oeuvre au sein d'un contrôleur de communication en champ proche, comprenant une retransmission d'une tension d'alimentation externe depuis au moins un noeud d'entrée d'alimentation vers au moins un noeud de sortie d'alimentation dans un mode d'alimentation en dérivation, le procédé comprenant une activation automatique du mode d'alimentation en dérivation, par une unité de gestion d'alimentation configurée matériellement, si la tension d'alimentation externe est présente sur ledit au moins un noeud d'entrée d'alimentation.

Selon un mode de mise en oeuvre, le procédé comprend une détection de la présence de la tension d'alimentation externe sur ledit au moins un noeud d'entrée d'alimentation, par au moins un circuit de détection de tension configuré matériellement.

Selon un mode de mise en oeuvre, ladite activation automatique du mode d'alimentation en dérivation est conditionnée par ladite présence de la tension d'alimentation externe sur ledit au moins un noeud d'entrée d'alimentation, et par au moins une donnée de configuration contenue dans un registre de configuration.

Selon un mode de mise en oeuvre, ladite activation automatique du mode d'alimentation en dérivation comprend un démarrage d'au moins un limiteur de courant pour limiter le courant sur ledit au moins un noeud de sortie d'alimentation.

Avantageusement, le procédé est mis en oeuvre de manière indépendante et automatique dans un mode basse consommation du contrôleur de communication en champ proche.

Selon un mode de mise en oeuvre, le procédé comprend en outre une génération d'une tension d'alimentation interne sur ledit au moins un noeud de sortie d'alimentation dans un mode d'alimentation autonome.

Selon un autre aspect, il est également proposé une méthode de gestion de l'alimentation dans un système électronique comportant un contrôleur de communication en champ proche, une unité de commande de télécommunications fournissant la tension d'alimentation externe au contrôleur de communication en champ proche, et au moins un périphérique de sécurité alimenté par le contrôleur de communication en champ proche suivant le procédé de gestion de l'alimentation tel que défini ci-avant.

D'autres avantages et caractéristiques de l'invention apparaîtront à l'examen de la description détaillée de mode de réalisation et de mise en oeuvre, nullement limitatifs, et des dessins annexés, sur lesquels les figures :
[Fig.1], et
[Fig.2], et
[Fig.3], et
[Fig.4], et
[Fig.5] illustrent des modes de réalisation et de mise en oeuvre de l'invention.

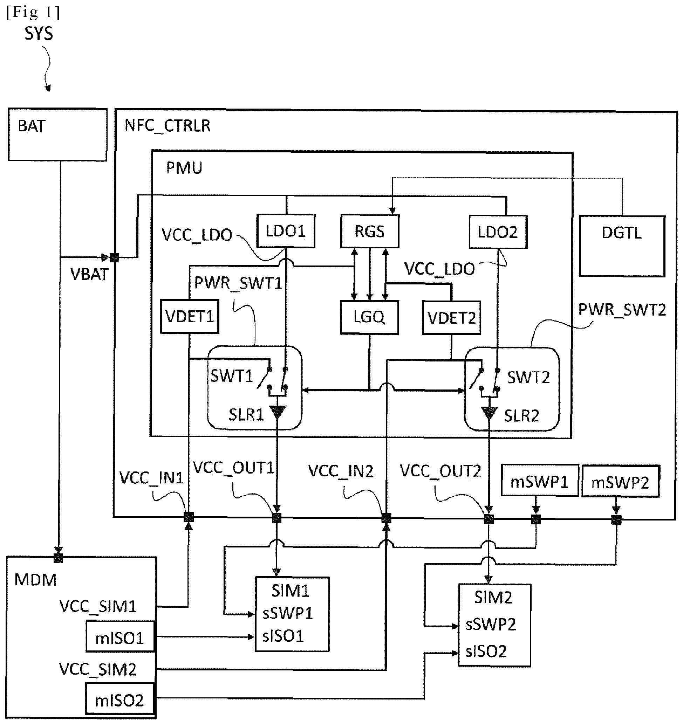

La figure 1 illustre un exemple de système électronique SYS, tel qu'un téléphone portable multifonction.

Le système électronique SYS incorpore un circuit intégré de contrôleur de communication en champ proche NFC_CTRLR, ainsi que par exemple une unité de commande de télécommunications MDM usuellement appelée « modem », au moins un périphérique de sécurité SIM1, SIM2, ainsi qu'un moyen d'alimentation BAT, par exemple une batterie, fournissant l'énergie du système et notamment une tension d'alimentation du système VBAT.

Les périphériques de sécurité SIM1, SIM2, tels que par exemple des périphériques d'identification de l'utilisateur (ou « Subscriber Identification Module » en anglais), peuvent être utilisés par le contrôleur de communication en champ proche NFC_CTRLR et par le modem MDM.

Par exemple, le modem MDM est configuré pour communiquer avec les périphériques de sécurité SIM1, SIM2 par l'intermédiaire d'un bus, par exemple un bus défini par la norme « ISO 7816 » relative à des cartes d'identification électronique munies des contacts. Le bus « ISO 7816 » fait par exemple la liaison, respectivement pour chaque périphérique SIM1, SIM2, entre une interface de maître mISO1, mISO2 du modem MDM et une interface d'esclave sISO1, sISO2 du périphérique de sécurité SIM1, SIM2.

Par exemple, le contrôleur NFC _CTRLR est configuré pour communiquer avec les périphériques de sécurité SIM1, SIM2 par l'intermédiaire d'un bus, par exemple un bus du type « SWP » (pour « Single Wire Protocol », c'est-à-dire un protocole de communication sur une connexion à fil unique, en particulier dédié aux communications entre des cartes « SIM » et des contrôleurs « NFC »). Le bus « SWP » fait la liaison, respectivement pour chaque périphérique SIM1, SIM2, entre une interface de maître mSWP1, mSWP2 du contrôleur NFC_CTRLR et une interface d'esclave sSWP1, sSWP2 du périphérique de sécurité SIM1, SIM2.

Les périphériques de sécurité SIM1, SIM2 sont configurés pour être alimentés, c'est-à-dire recevoir une tension d'alimentation, sur au moins un noeud de sortie d'alimentation VCC_OUT1, VCC_OUT2 du contrôleur de communication en champ proche NFC_CTRLR.

Le contrôleur NFC_CTRLR est configuré pour effectuer la gestion de l'alimentation des périphériques de sécurité SIM1, SIM2, et comporte à cet égard une unité de gestion d'alimentation PMU.

L'unité de gestion d'alimentation PMU est configurée pour fournir une tension d'alimentation sur les noeuds de sorties d'alimentations VCC_OUT1, VCC _OUT2, dans un mode d'alimentation en dérivation BPSS en particulier, et par exemple en outre dans un mode d'alimentation autonome.

Dans le mode d'alimentation autonome, au moins un générateur de tension LDO1, LDO2, incorporé à l'unité de gestion d'alimentation PMU, est configuré pour générer une tension d'alimentation interne VCC_LDO sur ledit au moins un noeud de sortie d'alimentation VCC_OUT1, VCC_OUT2. Le générateur de tension LDO1, LDO2 peut être un circuit du type régulateur à faible chute de tension, apte à réguler la tension la tension d'alimentation du système VBAT à un niveau adapté aux périphériques SIM1, SIM2.

Dans le mode d'alimentation en dérivation BPSS, l'unité de gestion d'alimentation PMU est adaptée pour recevoir au moins une tension d'alimentation externe VCC_SIM1, VCC _SIM2, sur au moins un noeud d'entrée d'alimentation respectif VCC_IN1, VCC_IN2, et retransmettre la tension d'alimentation externe VCC _SIM1, VCC _SIM2 vers au moins un noeud de sortie d'alimentation VCC_OUT1, VCC_OUT2.

En outre, l'unité de gestion d'alimentation PMU est matériellement configurée pour automatiquement activer le mode d'alimentation en dérivation BPSS, si ladite au moins une tension d'alimentation externe VCC_SIM1, VCC_SIM2 est présente le noeud d'entrée d'alimentation VCC_IN1, VCC_IN2 respectif.

L'unité de gestion d'alimentation PMU est avantageusement matériellement configurée de manière à pouvoir fonctionner de façon autonome, et notamment indépendamment de l'état ou du mode de fonctionnement du contrôleur NFC CTRLR.

L'unité de gestion d'alimentation PMU est par exemple configurée pour fonctionner automatiquement, même dans un mode basse consommation HIBERN du contrôleur de communication en champ proche NFC_CTRLR. Le mode basse consommation HIBERN peut par exemple être un mode « très basse consommation », ou selon les dénominations un mode « sommeil » ou « hibernation », voire également un mode forcé à l'arrêt du contrôleur de communication en champ proche NFC_CTRLR.

Par exemple, ladite au moins une tension d'alimentation externe(s) VCC_SIM1, VCC_SIM2 est générée par l'unité de commande de télécommunications MDM, branchée sur ledit au moins un noeud d'entrée d'alimentation VCC_IN1, VCC_IN2 du contrôleur NFC_CTRLR en vue d'alimenter le ou les périphérique(s) de sécurité(s) SIM1, SIM2 dans le mode d'alimentation en dérivation BPSS dudit contrôleur NFC CTRLR.

On notera que l'activité, le mode de fonctionnement, et l'usage des services des périphériques de sécurités SIM1, SIM2, relatifs à l'unité de commande de télécommunications MDM sont indépendants de l'état et du mode de fonctionnement du contrôleur de communication en champ proche NFC_CTRLR.

L'unité de gestion d'alimentation PMU peut comporter un circuit de détection de tension VDET1, VDET2, sur chaque noeud(s) d'entrée(s) d'alimentation(s), matériellement configuré pour détecter la présence de la tension d'alimentation externe VCC_SIM1, VCC_SIM2 sur le noeud d'entrée d'alimentation VCC_IN1, VCC_IN2 respectif.

Le circuit de détection de tension VDET1, VDET2 est configuré pour générer un signal de détection pouvant avoir les niveaux logiques « 1 » ou « 0 », transmis à un circuit logique LGQ. Les niveaux du signal de détection sont respectivement représentatifs de la présence ou de l'absence du signal de tension d'alimentation externe VCC_SIM1, VCC_SIM2 sur le noeud VCC_IN1, VCC_IN2 respectif.

Le circuit logique LGQ de l'unité de gestion d'alimentation PMU est matériellement configuré pour automatiquement activer le mode d'alimentation en dérivation BPSS, d'une part de façon conditionnée par ladite présence de la tension d'alimentation externe VCC_SIM1, VCC_SIM2, communiquée par le signal de détection du détecteur de tension VDET1, VDET2 respectif.

Le mode d'alimentation en dérivation BPSS, peut être d'autre part activé de façon conditionnée par au moins une donnée de configuration BPSS_AUTO_EN_LTCHD contenue dans un registre de configuration RGS.

La donnée de configuration BPSS_AUTO_EN_LTCHD peut correspondre à une commande d'activation ou de désactivation de la fonctionnalité d'activation automatique du mode d'alimentation en dérivation BPSS.

Le registre de configuration RGS est par exemple destiné à être écrit par une commande provenant d'une unité centrale numérique DGTL, par exemple par une commande issue d'une exécution logicielle d'un microprogramme du contrôleur NFC_CTRLR.

Enfin, l'unité de gestion d'alimentation PMU comporte un étage de commutateur d'alimentation PWR_SWT1, PWR_SWT2, pour respectivement chaque noeud de sortie d'alimentation VCC_OUT1, VCC_OUT2.

D'une part, chaque étage de commutateur d'alimentation PWR_SWT1, PWR_SWT2 comporte un circuit commutateur SWT1, SWT2 configuré pour acheminer sur le noeud de sortie respectif VCC_OUT1, VCC_OUT2,
- soit la tension d'alimentation interne VCC_LDO provenant du générateur de tension respectif LDO1, LDO2, dans le mode d'alimentation autonome,
- soit la tension d'alimentation externe VCC_SIM1, VCC_SIM2 provenant du noeud d'entrée d'alimentation respectif VCC_IN1, VCC_IN2, dans le mode d'alimentation en dérivation BPSS.

D'autre part, chaque étage de commutateur d'alimentation PWR_SWT1, PWR_SWT2 peut comporter un limiteur de courant SLR1, SLR2 (usuellement nommé « slew rate limiter » en anglais), configuré pour limiter la quantité de courant pouvant s'écouler sur ledit au moins un noeud de sortie d'alimentation VCC_OUT1, VCC_OUT2.

Ainsi, lors de l'activation automatique du mode d'alimentation en dérivation BPSS, l'unité de gestion d'alimentation PMU commande le circuit commutateur SWT1, SWT2 dans la position correspondante, et commande un démarrage du limiteur de courant SLR1, SLR2.

Le démarrage du limiteur de courant SLR1, SLR2 peut lui-aussi être conditionné par une donnée de configuration SLR_AUTO_EN_LTCHD contenue dans le registre de configuration RGS. Ainsi, la donnée de configuration SLR_AUTO_EN_LTCHD peut correspondre à une commande d'activation ou de désactivation de la fonctionnalité du démarrage automatique du ou des limiteur(s) de courant SLR1, SLR2.

Le limiteur de courant SLR1, SLR2 permet notamment de prévenir le risque qu'il y ait un appel de courant trop important sur le noeud de sortie d'alimentation VCC_OUT1, VCC_OUT2 correspondant, connecté aux périphériques de sécurité SIM1, SIM2, par exemple lors de l'application de la tension d'alimentation VCC_SIM1, VCC_SIM2 ou VCC_LDO à retransmettre sur le noeud de sortie d'alimentation VCC_OUT1, VCC_OUT2.

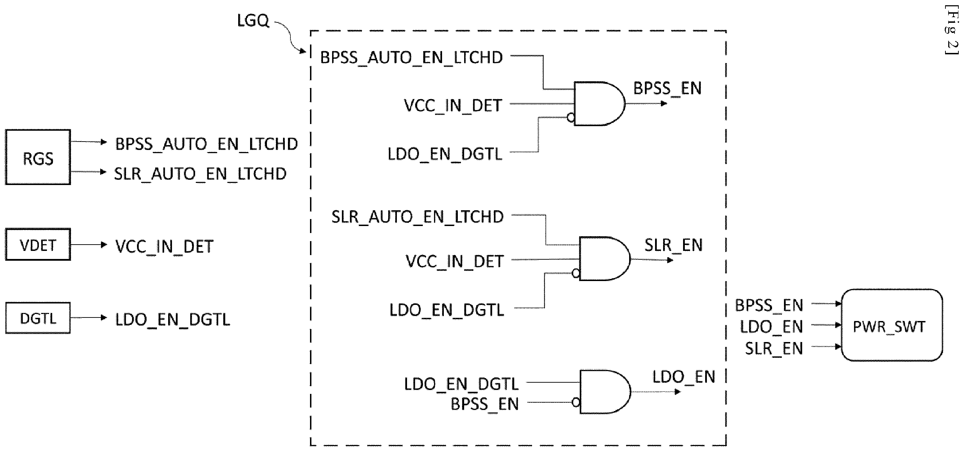

La figure 2 illustre un exemple élémentaire de configuration matérielle du circuit logique LGQ permettant les fonctionnalités automatiques susmentionnées ; c'est-à-dire les fonctionnalités d'activation automatique du mode d'alimentation en dérivation BPSS et de démarrage automatique du ou des limiteur(s) de courant SLR1, SLR2.

Le circuit logique LGQ peut par exemple fonctionner de manière conditionnée par les données de configuration BPSS_AUTO_EN_LTCHD, SLR_AUTO_EN_LTCHD contenues dans le registre de configuration RGS ; par le signal numérique de détection VCC_IN_DET généré par le circuit de détection de tension VDET ; et par un signal numérique de commande de mode d'alimentation autonome LDO_EN_DGTL généré par l'unité centrale numériques DGTL du contrôleur de communication en champ proche NFC_CTRLR.

Le circuit logique LGQ est par exemple configuré pour générer un signal de commande de commutation BPSS_EN, dont la valeur logique « 1 » commande le circuit commutateur correspondant SWT1, SWT2 dans la position du mode d'alimentation en dérivation.

Le signal de commande de commutation BPSS_EN est généré par la condition triple : BPSS_AUTO_EN_LTCHD et VCC_IN_DET et non-LDO_EN_DGTL, avec « et » et « non » les opérateurs de logique booléenne classiques et connus en soi.

En d'autres termes, le signal de commande de commutation BPSS_EN est automatiquement généré à « 1 » en cas de détection de la présence de la tension d'alimentation externe VCC_IN_DET=1, à condition que cette fonctionnalité soit activée avec BPSS_AUTO_EN_LTCHD=1 et que le mode d'alimentation autonome ne soit pas commandé par l'unité centrale LDO_EN_DGTL=0.

Le circuit logique LGQ est par exemple configuré pour générer un signal de commande de démarrage SLR_EN, dont la valeur logique « 1 » commande le démarrage des limiteurs de courant SLR1, SLR2.

Le signal de commande de démarrage SLR_EN est généré par la condition triple : SLR_AUTO_EN_LTCHD et VCC_IN_DET et non-LDO_EN_DGTL, avec « et » et « non » les opérateurs de logique booléenne classiques et connus en soi.

En d'autres termes, le signal de commande de démarrage SLR_EN est automatiquement généré à « 1 » en cas de détection de la présence de la tension d'alimentation externe VCC_IN_DET=1, à condition que cette fonctionnalité soit activée avec SLR_AUTO_EN_LTCHD=1 et que le mode d'alimentation autonome ne soit pas commandé par l'unité centrale LDO_EN_DGTL=0.

Le circuit logique LGQ est par exemple configuré pour générer un deuxième signal de commande de commutation LDO_EN, dont la valeur logique « 1 » commande les circuits commutateurs SWT1, SWT2 dans la position du mode d'alimentation autonome.

Le deuxième signal de commande de commutation LDO_EN est généré par la condition : LDO_EN_DGTL et non-BPSS_EN, avec « et » et « non » les opérateurs de logique booléenne classiques et connus en soi.

En d'autres termes, le deuxième signal de commande de commutation LDO_EN est automatiquement généré à « 1 » en cas de commande du mode d'alimentation autonome par l'unité centrale LDO_EN_DGTL=0, à condition que le signal de commande de commutation BPSS_EN ne soit pas généré à « 1 ».

Ainsi, le circuit logique LGQ peut prévoir un mécanisme configuré matériellement pour empêcher une commande transitoire des circuits commutateurs SWT1, SWT2, simultanément dans la position du mode d'alimentation autonome et dans la position du mode d'alimentation en dérivation (c'est-à-dire, dans le dessin de la figure 1, une commande des deux interrupteurs fermés, connectant ensemble le noeud d'entrée VCC_IN1/VCC_IN2 et la sortie du générateur de tension LDO1/LDO2).

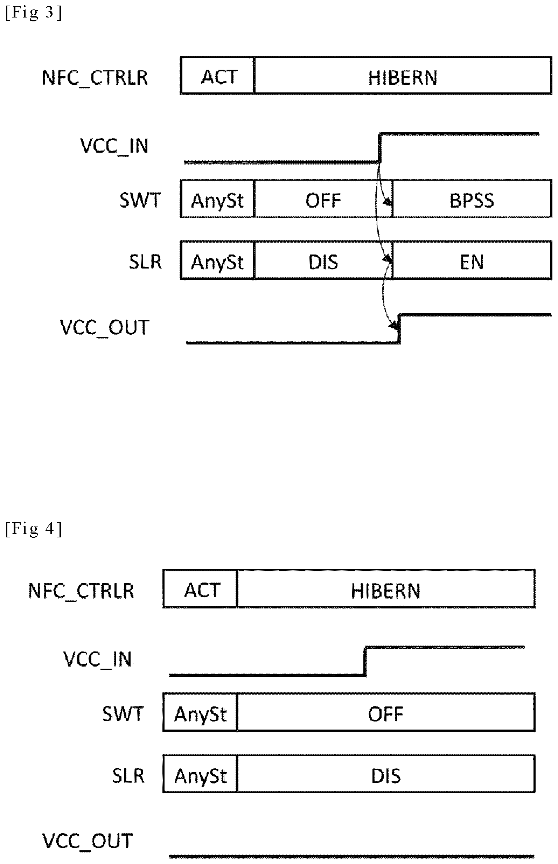

Les figures 3, 4 et 5 illustrent des exemples de mises en oeuvre et des avantages du procédé de gestion de l'alimentation effectué par le circuit intégré de contrôleur de communication en champ proche NFC_CTRLR décrit précédemment en relation avec les figures 1 et 2.

Les figures 3, 4 et 5 représentent, en fonction du temps horizontalement :
- le mode de fonctionnement ou l'état ACT, HIBERN dans lequel peut se trouver le contrôleur NFC_CTRLR ;
- le signal VCC_IN présent sur le noeud d'entrée d'alimentation VCC_IN1, VCC_IN2 choisi arbitrairement ;
- la position AnySt, OFF, BPSS, du circuit commutateur SWT correspondant à ce noeud d'entrée ;
- l'état de fonctionnement AnySt, DIS, EN, du limiteur de courant SLR correspondant à ce noeud d'entrée ;
- le signal VCC_OUT retransmis sur le noeud de sortie d'alimentation VCC_OUT1, VCC_OUT2 correspondant à ce noeud d'entrée.

La figure 3 illustre un cas où le contrôleur NFC_CTRLR est sorti d'un mode actif ACT pour entrer dans un mode basse consommation HIBERN.

Dans le mode actif ACT, le contrôleur NFC_CTRLR est par exemple commandé de façon logicielle par l'unité centrale numérique DGTL, et est capable de fournir l'alimentation sur le noeud de sortie d'alimentation VCC _OUT dans le mode d'alimentation autonome, ou de ne pas fournir d'alimentation, ou bien de fournir l'alimentation dans le mode d'alimentation en dérivation. Le circuit commutateur PWT et le limiteur de courant SLR correspondant peuvent être dans un état quelconque AnySt, par exemple commandé par l'unité centrale numérique DGTL.

Dans le mode basse consommation HIBERN, par exemple appelé mode « très basse consommation », ou encore mode « sommeil » ou « hibernation », et voire aussi un mode forcé à l'arrêt, le contrôleur NFC_CTRLR vise une consommation minimale de courant, par exemple de l'ordre de 2µA à 3µA (micro Ampère).

A cet égard, la mise en oeuvre logicielle de l'unité centrale numérique DGTL est arrêtée, le circuit commutateur SWT est commandé dans une position d'arrêt OFF dans laquelle le noeud de sortie d'alimentation VCC_OUT est connecté à la masse ou éventuellement placé à un potentiel flottant à haute impédance, et le limiteur de courant SLR est désactivé DIS.

On notera que la consommation, en activité, du limiteur de courant SLR, par exemple de l'ordre de 10µA (micro Ampère), est à elle seule supérieure à l'objectif de consommation dans le mode basse consommation HIBERN.

Si, dans le mode basse consommation HIBERN, la tension d'alimentation externe est appliquée sur le noeud d'entrée d'alimentation VCC_IN, alors le mode d'alimentation en dérivation est automatiquement activé, positionnant le circuit commutateur SWT dans la position d'alimentation en dérivation BPSS, et le limiteur de courant SLR est activé EN.

Ainsi, le noeud d'entrée d'alimentation VCC_IN est couplé au noeud de sortie d'alimentation VCC_OUT, et la tension d'alimentation externe VCC_IN est retransmise dans la tension de sortie d'alimentation VCC_OUT.

On notera que la réaction du contrôleur NFC _CTRLR à la présence de la tension externe sur le noeud d'entrée d'alimentation VCC_IN se fait automatiquement, de façon matérielle, et en particulier sans commande issue de l'exécution logicielle d'un programme par l'unité centrale numérique DGTL.

Ainsi, il n'est pas nécessaire de passer par un état actif ACT du contrôleur NFC_CTRLR, après une phase de démarrage logiciel (usuellement « boot » en anglais), pour commander la configuration du mode d'alimentation en dérivation.

Cela permet non seulement de bénéficier d'un temps de réaction plus rapide dans la gestion de l'alimentation pour activer le mode en dérivation, mais aussi d'éviter la consommation énergétique du mode actif ACT.

La figure 4 illustre le même cas que celui de la figure 3, mais dans un paramétrage où la fonctionnalité d'activation automatique du mode d'alimentation en dérivation est désactivée, par exemple en enregistrant la donnée de configuration BPSS_AUTO_EN_LTCHD (voire précédemment en relation avec la figure 2) à la valeur désactivée « 0 » dans le registre de configuration RGS.

Si, dans ce cas, la tension d'alimentation externe est appliquée sur le noeud d'entrée d'alimentation VCC_IN, alors le mode d'alimentation en dérivation n'est pas activé, et la tension de sortie VCC_OUT reste nulle, par exemple couplée à la masse par le circuit commutateur. On notera que le limiteur de courant SLR n'a est resté éteint DIS.

Bien entendu, le cas de la figure 3 correspond au paramétrage où la fonctionnalité d'activation automatique du mode d'alimentation en dérivation est activée, par exemple en enregistrant BPSS_AUTO_EN_LTCHD à la valeur activé « 1 » dans le registre de configuration RGS.

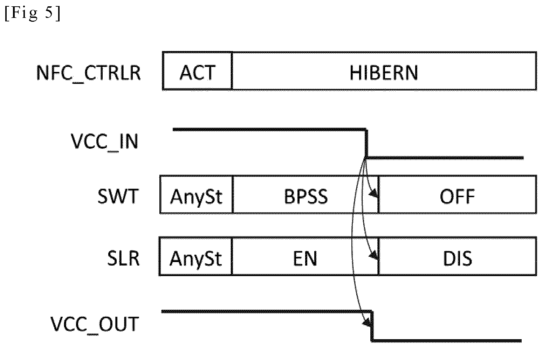

La figure 5 illustre le cas où le contrôleur NFC_CTRLR entre dans le mode basse consommation HIBERN en étant déjà dans le mode d'alimentation en dérivation.

Ainsi, dans le mode basse consommation HIBERN, la tension d'alimentation externe est appliquée sur le noeud d'entrée d'alimentation VCC_IN, le circuit commutateur SWT est dans la position d'alimentation en dérivation BPSS et le limiteur de courant SLR est activé EN.

Si, dans cet état, la tension d'alimentation externe cesse d'être appliquée sur le noeud d'entrée d'alimentation VCC_IN, alors le mode d'alimentation en dérivation est automatiquement désactivé, positionnant le circuit commutateur SWT dans la position d'arrêt OFF et le limiteur de courant SLR est désactivé DIS.

Il a ainsi été décrit des exemples d'une technique permettant l'activation/désactivation automatique du mode d'alimentation en dérivation, ainsi que l'activation/désactivation automatique du limiteur de courant SLR dans le mode d'alimentation en dérivation pour limiter la consommation en mode très basse consommation. En outre, le logiciel DGTL du contrôleur NFC_CTRLR a la possibilité d'autoriser ou non ces fonctionnalités d'activations/désactivations automatiques.

En particulier, il n'est pas nécessaire « de réveiller » le contrôleur NFC CTRLR dans l'état actif ACT, ni de faire intervenir le logiciel, pour effectuer la gestion de l'alimentation selon ces deux fonctionnalités.

En outre, ces fonctionnalités sont également effectives lorsque le contrôleur NFC est forcé à l'état éteint, par exemple par un signal d'extinction imposé sur une broche externe du circuit intégré. Ainsi, même si le logiciel du contrôleur NFC_CTRLR n'est jamais activé dans la vie du système SYS, les périphériques de sécurité SIM1, SIM2 peuvent être utilisés par le modem MDM.

Par ailleurs, ces fonctionnalités ne sont pas affectées un par une réinitialisation externe (usuellement « hard reset » en anglais), et ne présentent pas le risque d'engendrer un dysfonctionnement le cas échéant.

## Revendications

1. Circuit intégré de contrôleur de communication en champ proche (NFC_CTRLR) comportant une unité de gestion d'alimentation (PMU) adaptée pour retransmettre une tension d'alimentation externe (VCC_SIM1) depuis au moins un noeud d'entrée d'alimentation (VCC_IN1) vers au moins un noeud de sortie d'alimentation (VCC_OUT1) dans un mode d'alimentation en dérivation (BPSS), l'unité de gestion d'alimentation (PMU) étant matériellement configurée pour automatiquement activer le mode d'alimentation en dérivation (BPSS) si la tension d'alimentation externe (VCC_SIM1) est présente sur ledit au moins un noeud d'entrée d'alimentation (VCC_IN).

2. Circuit intégré selon la revendication 1, dans lequel l'unité de gestion d'alimentation (PMU) comporte au moins un circuit de détection de tension (VDET1) matériellement configuré pour détecter la présence de la tension d'alimentation externe (VCC_SIM1) sur ledit au moins un noeud d'entrée d'alimentation (VCC_IN1).

3. Circuit intégré selon l'une des revendications 1 ou 2, dans lequel l'unité de gestion d'alimentation (PMU) comporte un circuit logique (LGQ) matériellement configuré pour automatiquement activer le mode d'alimentation en dérivation (BPSS), de manière conditionnée par ladite présence de la tension d'alimentation externe (VCC_SIM1), et par au moins une donnée de configuration (BPSS_AUTO_EN_LTCHD) contenue dans un registre de configuration (RGS).

4. Circuit intégré selon l'une des revendications 1 à 3, dans lequel l'unité de gestion d'alimentation (PMU) comporte au moins un limiteur de courant (SLR1) configuré pour limiter le courant sur ledit au moins un noeud de sortie d'alimentation (VCC_OUT1), et l'unité de gestion d'alimentation (PMU) est configurée pour commander un démarrage du limiteur de courant (SLR) dans le mode d'alimentation en dérivation (BPSS).

5. Circuit intégré selon l'une des revendications 1 à 4, dans lequel l'unité de gestion d'alimentation (PMU) est matériellement configurée pour fonctionner de manière indépendante et automatique dans un mode basse consommation (HIBERN) du contrôleur de communication en champ proche (NFC_CTRLR).

6. Circuit intégré selon l'une des revendications 1 à 5, dans lequel l'unité de gestion d'alimentation (PMU) comporte en outre au moins un générateur de tension (LDO1) adapté pour générer une tension d'alimentation interne (VCC_LDO) sur ledit au moins un noeud de sortie d'alimentation (VCC_OUT1), dans un mode d'alimentation autonome.

7. Système électronique comportant un circuit intégré de contrôleur de communication en champ proche (NFC_CTRLR) selon l'une des revendications 1 à 6, une unité de commande de télécommunications (MDM) apte à fournir la tension d'alimentation externe (VCC_SIM1, VCC_SIM2) sur ledit au moins un noeud d'entrée d'alimentation (VCC_IN1, VCC_IN2) du contrôleur de communication en champ proche (NFC_CTRLR), et au moins un périphérique de sécurité (SIM1, SIM2) apte à être alimenté sur ledit au moins un noeud de sortie d'alimentation (VCC_OUT1, VCC_OUT2) du contrôleur de communication en champ proche (NFC_CTRLR).

8. Procédé de gestion de l'alimentation, mis en oeuvre au sein d'un contrôleur de communication en champ proche (NFC_CTRLR), comprenant une retransmission d'une tension d'alimentation externe (VCC_SIM1) depuis au moins un noeud d'entrée d'alimentation (VCC_IN) vers au moins un noeud de sortie d'alimentation (VCC_OUT1) dans un mode d'alimentation en dérivation (BPSS), le procédé comprenant une activation automatique du mode d'alimentation en dérivation (BPSS), par une unité de gestion d'alimentation (PMU) configurée matériellement, si la tension d'alimentation externe (VCC_SIM1) est présente sur ledit au moins un noeud d'entrée d'alimentation (VCC_IN).

9. Procédé selon la revendication 8, comprenant une détection de la présence de la tension d'alimentation externe (VCC_SIM1) sur ledit au moins un noeud d'entrée d'alimentation (VCC_IN1), par au moins un circuit de détection de tension configuré matériellement.

10. Procédé selon l'une des revendications 8 ou 9, dans lequel ladite activation automatique du mode d'alimentation en dérivation (BPSS) est conditionnée par ladite présence de la tension d'alimentation externe (VCC_SIM1) sur ledit au moins un noeud d'entrée d'alimentation (VCC_IN1), et par au moins une donnée de configuration (BPSS_AUTO_EN_LTCHD) contenue dans un registre de configuration (RGS).

11. Procédé selon l'une des revendications 8 à 10, dans lequel ladite activation automatique du mode d'alimentation en dérivation (BPSS) comprend un démarrage d'au moins un a limiteur de courant (SLR1) pour limiter le courant sur ledit au moins un noeud de sortie d'alimentation (VCC_OUT1).

12. Procédé selon l'une des revendications 8 à 11, mis en oeuvre de manière indépendante et automatique dans un mode basse consommation (HIBERN) du contrôleur de communication en champ proche (NFC_CTRLR).

13. Procédé selon l'une des revendications 8 à 12, comprenant en outre une génération d'une tension d'alimentation interne (VCC_NFC) sur ledit au moins un noeud de sortie d'alimentation (VCC_OUT1) dans un mode d'alimentation autonome.

14. Méthode de gestion de l'alimentation dans un système électronique comportant un contrôleur de communication en champ proche (NFC_CTRLR), une unité de commande de télécommunications (MDM) fournissant la tension d'alimentation externe (VCC_SIM1) au contrôleur de communication en champ proche (NFC_CTRLR), et au moins un périphérique de sécurité (SIM1) alimenté par le contrôleur de communication en champ proche (NFC_CTRLR) suivant le procédé de gestion de l'alimentation selon l'une des revendications 8 à 13.
